# EUROPEAN PATENT APPLICATION

(11) **EP 3 771 863 A1**
(43) Date of publication of application: **03.02.2021**
(21) Application number: 20186270.3
(22) Date of filing: 16.07.2020
(51) Int. Cl.: F23N 5/00, F23N 5/10

(54) **FURNACE CONTROL SYSTEM, FURNACE CONTROL METHOD, AND FURNACE PROVIDED WITH SAME CONTROL SYSTEM**

(30) Priority: 02.08.2019 JP 2019142955
(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: FUJISHIMA, Shoichi, Tokyo, 108-8509 (JP)
(74) Representative: Air Liquide

(57) **Abstract**

Problem To provide a furnace control system which can predict production of flammable gases produced inside a furnace during melting, incineration, and fusion batch processes and effectively carry out furnace combustion control on the basis of said prediction results in order to reduce the conventional problem of time lag.

Solution A furnace control system has a flammable gas quantity of state calculation unit 12 which calculates a flammable gas quantity of state corresponding to prediction factor data using a quantity of state estimation model for flammable gas originating in volatile organic compounds produced using intelligent information processing technology using as learning data past data relating to furnaces, data relating to materials, and data relating to exhaust gases, and a combustion control unit 11 which controls furnace combustion on the basis of the flammable gas quantity of state calculated by the flammable gas quantity of state calculation unit 12.

## Description

### Technical Field

The present invention relates to a furnace control system and furnace control method, for example a control system or a control method which controls a melting furnace for melt metals, etc., and incineration furnace for incinerating waste, etc., or a melting furnace for melting industrial raw materials or waste products, etc.

### Background Art

Batch processes are carried out in furnaces such as fusion furnaces (e.g., rotary furnaces, reverberatory furnaces, and electric furnaces), incineration furnaces, and melting furnaces, etc. (henceforth noted as furnaces). For example, efficiency is improved in batch processes for melting scrap (recycling resources) by effectively using as heating energy flammable gases originating in volatile organic compounds (VOC) produced by volatilization when the amount of plastic or carbon which is inserted grows or items for melting or incineration to which organic substances are attached are inserted and reach high temperatures in the furnace (henceforth simply called "flammable gas"), and adding oxidizing agents (e.g., oxygen or air) or reducing the amount of fuel supplied to burners which burn by mixing fuel and oxidizing agents in order to melt scrap material or incinerate waste products under normal conditions.

Patent Literature 1 proposes a method for optimizing the amount of fuel or oxidizing agents introduced into a furnace by detecting increases in the amount of carbon monoxide produced inside the furnace by measuring the temperature of exhaust gases. Proposed is a method for collecting data for quantity of state calculations for optimization, wherein the produced flammable gas mixes with an oxidizing agent such as oxygen in the surrounding air and ignites, thereby causing a combustion reaction which causes the temperature of the exhaust gas emitted by the furnace in the exhaust ducts to rise rapidly (or fall rapidly), a temperature sensor (e.g., a thermocouple) is used to measure the timing thereof, and the timing of production or end of production of flammable gases such as high-concentration carbon monoxide (CO), etc., is detected. Furthermore, Patent Literature 2 proposes an analysis method used in laser optic analysers as a method for measuring the amount of carbon monoxide and/or carbon dioxide in exhaust gas.

### Prior Art Documents

### Patent Documents

Patent Literature 1 - JP 2012-500959 A
Patent Literature 2 - US Patent Application Publication No. 2006/0202123, specification

### Summary of the Invention

### Problem to be Solved by the Invention

However, the time period during which flammable gas is produced in large quantities is estimated to be a fixed amount of time of several minutes after a new material has been inserted into the furnace. For example, for each batch, the time period from volatile organic compounds (VOC) included in room temperature materials being heated, reaching a temperature range for volatilization, and producing high concentration flammable gas until production ends is several minutes after production. On the other hand, there is a time lag until the flammable gases which have been produced can be detected. Specifically, the movement time for the exhaust gas to move from the furnace to a measurement means in the exhaust duct, which is the exhaust path, the speed of measurement by the measurement means, and the delay in response time until the burner combustion is controlled based on the measurement results cannot be avoided. That time lag exists in Patent Literature 1.

In view of these circumstances, an object of the present invention is to provide a furnace control system and furnace control method, wherein, in order to reduce conventional problems with time lag, results of production of flammable gas produced inside a furnace under various conditions of melting, incineration, or fusion batch processes (concentration, time period) are subject to iterative learning, production thereof is predicted during subsequent batch processes, and combustion control of the furnace can be carried out effectively on the basis of the prediction results.

### Means for Solving the Problem

A furnace control system according to the present invention has
a flammable gas quantity of state calculation unit which calculates a flammable gas quantity of state corresponding to prediction factor data (e.g., input values of data relating to furnaces, data relating to materials, and data relating to processes, etc.) using a quantity of state estimation model for flammable gas originating in volatile organic compounds which are produced (henceforth referred to simply as "flammable gas") by means of intelligent information processing technology using as learning data past data relating to furnaces, data relating to materials, and data relating to exhaust gases, and
a combustion control unit which controls furnace combustion on the basis of the flammable gas quantity of state calculated by the flammable gas quantity of state calculation unit.

The combustion control unit may carry out the following control in accordance with the calculated flammable gas quantity of state.
(1) Reducing or increasing fuel supplied to a burner depending on a reference burner combustion state which is pre-set.
(2) Increasing or decreasing an oxidizing agent supplied to the burner depending on a reference burner combustion state which is pre-set.
(3) Decreasing fuel supplied to the burner on the basis of the reference burner combustion state which is pre-set and/or increasing the oxidizing agent supplied to the burner.
(4) Supplying the oxidizing agent to an oxidizing agent supply means which is separate from the burner.
(5) Reducing the fuel and oxidizing agent supplied to the burner and supplying the oxidizing agent to the oxidizing agent supply means.
(6) Increasing or decreasing a voltage applied to DC electrodes or AC electrodes relative to a pre-set reference voltage

The combustion control unit may also send a predetermined control instruction corresponding to a purpose to (1) a flow rate control unit provided to a pipe through which fuel is supplied to the burner, (2) a flow rate control unit provided to a pipe through which an oxidizing agent is supplied to the burner, (3) a flow rate control unit provided to a pipe through which the oxidizing agent is supplied to an oxidizing agent supply means, and an (4) applied voltage control unit which controls voltage applied to electrodes, etc., the corresponding object of control thereby being controlled in response to the control instruction.

Furthermore, the combustion control unit may also send a control instruction to a (4) drive unit for driving the oxidizing agent supply means, the oxidizing agent supply means thereby being driven in response to the control instruction.

Examples of fuel include organic compounds such as hydrocarbon, etc., natural gas, methane gas, and propane gas, etc.

Examples of oxidizing agents include air, oxygen, and oxygen-enriched air, etc.

Examples of flow rate control units include mass flow controllers, control valves, etc. A pressure control unit may also be provided in lieu of or together with the flow rate control unit. Examples of pressure control units include pressure meters, pressure adjustment valves, back pressure valves, etc. Compressors and pressurizing devices, etc., may also be provided to various pipes.

Examples of furnaces include rotary furnaces, electric furnaces, reverberatory furnaces, and incineration furnaces, etc.

The furnace, comprises
a main furnace body,
a burner which is provided to the main furnace body,
an exhaust port for exhaust gas emitted from the main furnace body (may be an opening, may be a pipe structure),
an exhaust duct which is provided having a certain gap away from the exhaust port,
a combustion region in which uncombusted gas (flammable gas) included in exhaust gas and air flowing in through the gap cause a combustion reaction inside the exhaust duct, and a temperature measurement unit (e.g., a thermocouple, a non-contact temperature meter, an infrared sensor) and/or a pressure measurement unit (e.g., a heat-resistant pressure sensor) which measures the temperature and/or pressure of the combustion region.

The burner may have various functions, such as an air burner function, an oxygen burner function, an oxygen lance function, a carbon injection function, or a cooling (water) function, etc.

Furthermore, the burner may have a fuel introduction unit for introducing fuel, an oxidizing agent introduction unit for introducing an oxidizing agent (air or oxygen), and a discharge unit for discharging flames created by a combustion reaction between the fuel and the oxidizing agent.

The temperature measurement unit and/or the pressure measurement unit may also be provided near or downstream of the combustion region.

A concentration analysis device (e.g., a diode laser analysis device, an infrared analyser) which is provided near the exhaust port of the main furnace body or upstream of the combustion region and measures exhaust gas component concentrations (e.g., O₂, CO, CO₂, etc.)

The furnace may also be provided with an oxidizing agent supply means (e.g., an oxidizing agent supply nozzle, an oxidizing agent supply panel) which is separate from the burner.

The furnace may also have an electric coil and an arc plasma electrode unit as a heating energy source other than the burner.

The furnace, in the case of a rotary furnace, may also have a rotation mechanism which causes the main furnace body to rotate around a predetermined axis (e.g., the horizontal axis).

The furnace may also have a weight meter which can measure the weight of the main furnace body (the weight before and after insertion of materials) or the weight only of the content of the furnace.

Examples of "intelligent information processing technology" include machine learning, deep learning, reinforcement learning, and deep reinforcement learning, etc.

There is no particular limitation on machine learning, deep learning, reinforcement learning, and deep reinforcement learning algorithms, and conventional algorithms may also be used.

The flammable gas quantity of state estimation model may also be updated regularly with new learning data.

The learning data may include at least one, two, three, four, or five or more types of data from among specifications related to the furnace, process data (requisite energy amounts of electricity and fuel for each process), operation control data (supply amounts of electricity, fuel, and oxidizing agent), batch data (information on whether a batch is a first batch or an additional batch, the number of batches per day, the presence or absence of daytime and nighttime operation matching electricity charges), remaining amount data at the end of a batch (data indicating how much of a melted material from a previous batch remains, the weight being measured for calculation, in order to promote melting), the amount of material inserted per batch (weight is measured), and input data including the type of material and the quality of the material (these are referred to as "prediction factor data").

The learning data may further also include data of feature quantities extracted from the input data (the prediction factor data) on the basis of predetermined feature quantity extraction conditions. The feature quantities may also be calculated, for example, using methods such as principal component analysis and factor analysis, etc.

The learning data is preferably associated with training data, with consideration given to delay times in response speed for detecting flammable gases.

The training data may also include at least time series data for feature quantities of the exhaust gas emitted by the furnace (e.g., time series data for exhaust duct temperature, pressure, and flammable gas concentration).

The control system may also have a learning data generation unit which generates learning data, a training data generation unit which generates training data, and an estimation model generation unit which generates a flammable gas quantity of state estimation model using the learning data and the training data.

A separate information processing device may also have a learning data generation unit, a training data generation unit, and a flammable gas quantity of state estimation model. In this case, the control system may also have an acquisition unit (e.g., a communication unit, a storage unit, a reading device for a storage medium, etc.) which acquires the flammable gas quantity of state estimation model from the separate information processing device.

The learning data generation unit may also have a feature quantity calculation unit which calculates feature quantities on the basis of the predetermined feature quantity extraction conditions from input data (the prediction factor data). Methods such as principal component analysis and factor analysis, etc., may also be extraction conditions for feature quantities, for example.

**The control system**
may also have a display control unit which displays to a display unit the calculated flammable gas quantity of state as a time series graph.

The display unit may also display at least the prediction factor data together with the calculated flammable gas quantity of state.

The display control unit may also display at least an instruction amount relating to a combustion control (e.g., the supply amount of fuel, oxidizing agent, etc.) together with the calculated flammable gas quantity of state.

The display control unit can also display at least time series data of feature amounts of the exhaust gas (concentration, pressure, carbon monoxide concentration, carbon dioxide concentration, oxygen concentration) together with the calculated flammable gas quantity of state.

There is no particular limitation on the display device, which may be, for example, a liquid crystal monitor, an organic electroluminescent monitor, a CRT monitor, a smart phone, tablet, or a monitor for a general purpose computer, etc.

In the present invention, examples of metal materials inserted into the melting furnace include materials having one or more of the following metal elements. Examples include iron, aluminium, manganese, tin, zinc, lead, and copper, etc.

Furthermore, examples of refuse and other waste products include plastic, sheets including polyvinyl chloride, resin, and fibres, etc.

The constituent elements of the control system may be constituted by an information processing device (e.g., a computer, a server) having a memory, a processor, and a software program, or a dedicated circuit and firmware, etc. The information processing device may be on premises or in the cloud or a combination of both.

Another furnace combustion control method according to the present invention includes
a flammable gas quantity of state calculation step of calculating a flammable gas quantity of state corresponding to prediction factor data using a quantity of state estimation model for flammable gas originating in volatile organic compounds produced using intelligent information processing technology using as learning data past data relating to furnaces, data relating to materials, and data relating to exhaust gases, and
a combustion control step of controlling furnace combustion on the basis of the flammable gas quantity of state calculated in the flammable gas quantity of state calculation step.

The combustion control step may carry out the following control in accordance with the calculated flammable gas quantity of state.
(1) Reducing or increasing fuel supplied to a burner depending on a reference burner combustion state which is pre-set.
(2) Increasing or decreasing an oxidizing agent supplied to the burner depending on a reference burner combustion state which is pre-set.
(3) Decreasing fuel supplied to the burner on the basis of the reference burner combustion state which is pre-set and/or increasing the oxidizing agent supplied to the burner.
(4) Supplying the oxidizing agent to an oxidizing agent supply means which is separate from the burner. (5) Reducing the fuel and oxidizing agent supplied to the burner and supplying the oxidizing agent to the oxidizing agent supply means (e.g., an oxidizing agent supply nozzle, an oxidizing agent supply panel).
0018

The control method may also have a display step of displaying to a display unit the calculated flammable gas quantity of state as a time series graph.

The display step may also display at least the prediction factor data together with the calculated flammable gas quantity of state.

The display step may also display at least an instruction amount relating to a combustion control together with the calculated flammable gas quantity of state. The display step can also display at least time series data of feature amounts of the exhaust gas together with the calculated flammable gas quantity of state.

### Brief Description of the Drawings

FIG. 1 is a view showing one example of a control system of a rotary furnace according to embodiment 1.
FIG. 2 is one example of a function block diagram of constituent elements.
FIG. 3 is a view showing one example of learning data and training data.
FIG. 4 is a view showing one example of combustion control with respect to a calculated flammable gas quantity of state (prediction value).
FIG. 5 is a view showing an example of a control system of an electric furnace according to embodiment 2.

### Mode for Carrying Out the Invention

### (Embodiment 1)

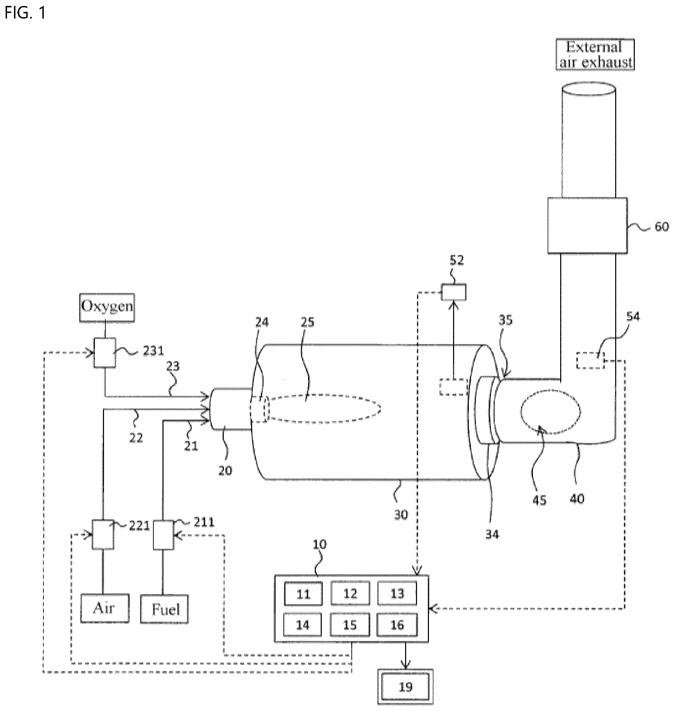

FIG. 1 is a view showing one example of a control system of a rotary furnace.

The rotary furnace has a main furnace body 30 which can be turned by a turning mechanism (not shown in the drawings) which turns around a predetermined axis (e.g., the horizontal axis), a burner 20 which is provided to the main furnace body 30, and an exhaust port 34 for exhaust gas which is emitted from the main furnace body 30.

A concentration analysis device 52 is provided near the exhaust port 34. The concentration analysis device 52 measures in real time the concentration of volatile gas components (e.g., O₂, CO, CO₂, etc.) in the exhaust gas and sends the measurement values to a control system 10.

An exhaust duct 40 is provided having a certain gap 35 from the exhaust port 34. The exhaust duct 40 is L-shaped but is not limited to this. The exhaust duct is provided with a detoxifying device 60 for detoxifying the exhaust gas to a level allowing emission into the atmosphere, and an exhaust fan (not shown in the drawings) upstream or downstream thereof.

In a combustion region 45 inside the exhaust duct, flammable gas included in the exhaust gas and air flowing in through the gap 35 cause a combustion reaction. A temperature measurement unit 54 (e.g., a thermocouple) measures in real time the temperature of the exhaust gas near the combustion region 45 or in a region downstream thereof in order to determine whether or not combustion has been confirmed in the combustion region 45, and sends the measurement value to the control system 10.

If there has been a predetermined rise in temperature, it is determined that flammable gas is present.

The burner 20 has the functionality of an air burner and an oxygen burner, and has a fuel introduction unit 21 for introducing fuel, an air introduction unit 22 for introducing air, an oxygen introduction unit 23 for introducing oxygen, and a discharge unit 24 for discharging flames 25 resulting from the combustion reaction between a fuel and an oxidizing agent (air, oxygen). Each introduction unit is constituted having pipes, switch valves, pressure adjustment valves, flow rate adjustment valves, and so on, and is connected to each supply source (a fuel tank, an air tank, an oxygen tank, etc.).

The fuel introduction unit 21 is provided with a fuel flow rate control unit 211 which controls a supply amount for supplying fuel to the burner 20. The air introduction unit 22 is provided with an air flow rate control unit 221 which controls a supply amount for supplying air to the burner 20. The oxygen introduction unit 23 is provided with an oxygen flow rate control unit 231 which controls a supply amount for supplying oxygen to the burner 20.

The control system 10 provides overall control of batch processes for melting processes, e.g., providing burner drive control, drive control (starting and stopping) for a rotation mechanism (not shown in the drawings), control for sending melted materials elsewhere, and control for inserting materials, etc.

Various settings are input into the control system 10 or are stored in a memory 16.

The various settings (used also in input data which is discussed below) include, for example, specifications relating to the rotary furnace (type, volume, capacity), data relating to materials (types of materials, quality of materials), process data, requisite energy amounts, melting temperature setting values, batch data, remaining amount setting values, weight setting values for inserted materials per batch, burner and arc energy ratios (when there are arc electrodes), time lag setting values (the amount of time from energy insertion to production of flammable gas, delay time in response speed), etc., and are stored in the memory 16.

The control system 10 associates volatile gas component concentrations measured by the concentration analysis device 52 and temperatures measured by the temperature measurement unit 54 with measurement times (or times when these are stored in memory) and stores these in the memory 16.

The control system 10 associates operation control data for each batch (burner output (supply amounts of fuel, oxygen, air, etc.) with times (or times when these are stored in memory) and stores it in the memory 16.

A flammable gas quantity of state calculation unit 12 uses a flammable gas quantity of state estimation model to calculate a flammable gas quantity of state in accordance with the prediction factor data (e.g., data relating to the furnace, data relating to materials, data relating to processes, etc.). The flammable gas produced inside the furnace can thereby be predicted. The prediction factor data may include all of the input data making up learning data discussed below or a plurality selected from thereamong, and may also include time series data for feature amounts of the exhaust gas constituting training data.

The flammable gas quantity of state estimation model is a software program and is stored in a model storage unit 13. A method for generating the flammable gas quantity of state estimation model is described below.

A combustion control unit 11 controls combustion inside the furnace on the basis of the flammable gas quantity of state thus calculated. The combustion control unit 11 sends control instructions to the fuel flow rate control unit 211, the air flow rate control unit 221, and the oxygen flow rate control unit 231, controlling supply amounts in accordance with these control instructions.

In the present embodiment, the combustion control unit 11 carries out the following control in accordance with the calculated flammable gas quantity of state.
(1) Reducing the supply amount of fuel supplied to the burner 20 by a predetermined percentage of a reference supply amount for a predetermined amount of time at a timing at which a threshold value or more of flammable gas is predicted to be produced.
(2) Increasing the supply amount of oxygen and/or air supplied to the burner 20 by a predetermined percentage of a reference supply amount for a predetermined amount of time at a timing at which a threshold value or more of flammable gas is predicted to be produced.

Here, the supply amounts are increased and decreased, and the predetermined percentage for each is set according to the amount of flammable gas produced so as to satisfy the requisite energy amount.

The predetermined amount of time may be the amount of time during which a threshold value or more of flammable gas is predicted to be produced.

The supply amounts are increased and decreased for the predetermined amount of time, but this is not a limitation, and may be returned to the reference supply amount at a timing at which the flammable gas is predicted to reach or fall below the threshold value.

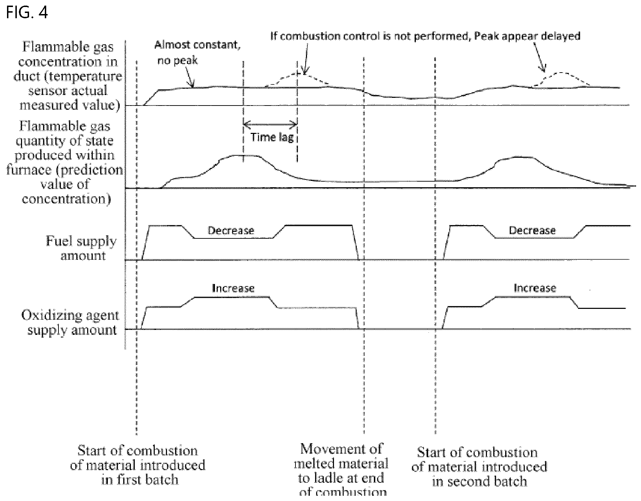

A display control unit 14 displays the calculated flammable gas quantity of state to a display device 19 as a time series graph. FIG. 4 shows a display example. In sequence from the top of FIG. 4, there is a temperature setting inside the exhaust duct 40, a prediction value of the flammable gas quantity of state produced inside the furnace, a fuel supply amount, an oxidizing agent supply amount, and so on, indicated so as to be able to distinguish between an initial batch and a second batch.

In the temperature setting inside the exhaust duct 40, the temperature measurement setting inside the exhaust duct 40 is substantially constant, with no peaks, so as to allow combustion of flammable gas inside the furnace by controlling the supply amount of the fuel and the oxidizing agent on the basis of the flammable gas production prediction. On the other hand, peaks are observed as indicated by the dotted line when the supply amount of the fuel and the oxidizing agent is not controlled on the basis of the flammable gas production prediction. That these dotted line peaks are a time lag of a predetermined amount of time from when flammable gas is produced was discussed above.

A communication unit 15 is a communication function for sending data back and forth to and from a model generation device 100 discussed below or other devices (tablet, smartphone, etc.).

### (Method for generating a flammable gas quantity of state estimation model)

The model generation device 100 has a communication function allowing exchange of various types of data with the control system 10.

The model generation device 100 has a learning data generation unit 101 which generates learning data, a training data generation unit 102 which generates training data, and an estimation model generation unit 103 which generates a flammable gas quantity of state estimation model using the learning data and the training data.

The model generation device 100 is provided with hardware (communication functionality, a bus, a memory, a processor (an MPU, a GPU), and an input/output interface, etc.) which can execute a software program built using machine learning and deep learning algorithms, etc.

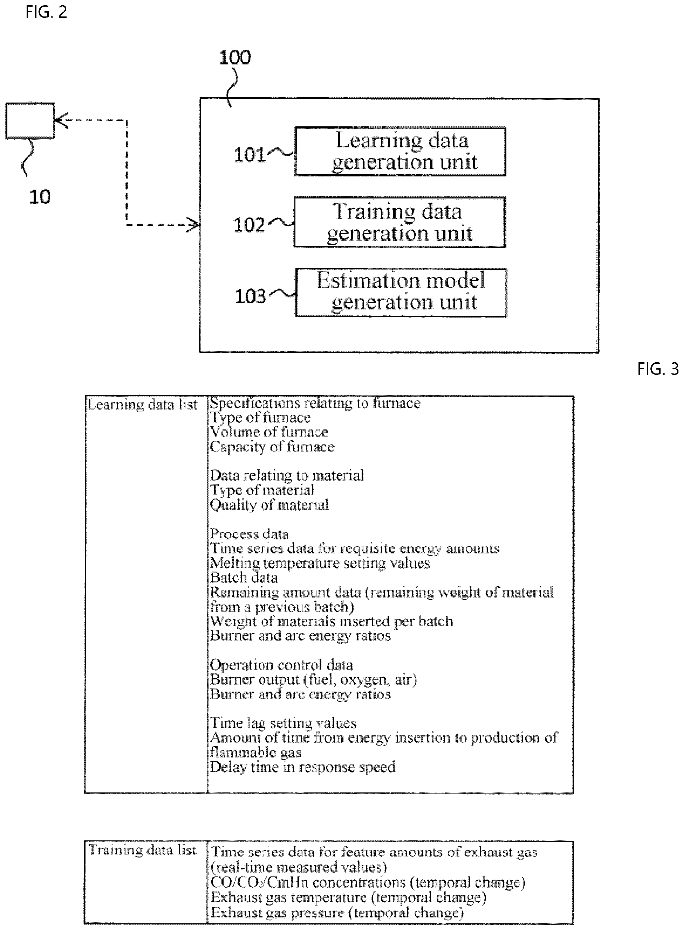

The learning data generation unit 101 generates learning data so as to include at least five types or more of data selected from specifications relating to the furnace, processing data (requisite energy amounts for each process), operation control data (electricity amounts, supply amounts of fuel and oxidizing agent), batch data (information on whether a batch is the first batch or an additional batch, number of batches per day, presence or absence of daytime and nighttime operation matching electricity charges), remaining amount data at the end of a batch (data indicating how much of a melted material from a previous batch remains, the weight being measured for calculation, in order to promote melting), the amount of material inserted per batch (weight is measured), and input data including the type of material and the quality of the material. FIG. 3 shows a learning data list example. The various types of learning data can use past input data.

The training data generation unit 102 sets time series data for feature amounts of the exhaust gas (e.g., time series data of the temperature and pressure inside and volatile gas component concentrations the exhaust duct). FIG. 3 shows a training data list example.

In the present embodiment, the temperature inside the exhaust duct is selected as the training data. This is time series data of feature amounts of the exhaust gas when corresponding to past input data, and data accumulated in the memory 16 in the control system 10 can be used.

The estimation model generation unit 103 generates a flammable gas quantity of state estimation model using machine learning or deep learning algorithms, using the learning data generated by the learning data generation unit 101 and the training data generated by the training data generation unit 102.

The estimation model generation unit 103 generates a flammable gas quantity of state estimation model after associating the learning data with the training data, taking into account delay times in flammable gas response speed.

"Delay times in response speed" may include, for example, movement delay times (movement time to move from the furnace to a measurement means in the exhaust duct), measurement delay times by the measurement means, and feedback delay times until combustion control of the burner, etc., begins on the basis of the measurement results, etc."Delay times in response" may be, for example, pre-set or set through experience or experiment, set on the basis of the learning data, or set in accordance to the burner, the type of measurement means, and the specification of the burner and other control devices, etc.

In other words, there is a difference between the time of the flammable gas being produced inside the furnace and the time required for the flammable gas to move to a measurement point where it is measured (the measurement value corresponding to the training data), and it is necessary to take into consideration at least the movement delay time and the measurement delay time in the difference between these two times. It is also possible to take into account the feedback delay time together with these, but the feedback delay time can be compensated for by anticipating it as a control delay and bringing forward the timing at which the combustion control unit issues a control instruction.

The flammable gas quantity of state estimation model may be constituted by, for example, a software program, dedicated electronics circuits, or built-in firmware. The software program may be stored in memory and a program procedure executed by a processor. In the present embodiment, the flammable gas quantity of state estimation model is stored in the model storage unit 13 of the control system 10 as a software program.

### (Embodiment 2)

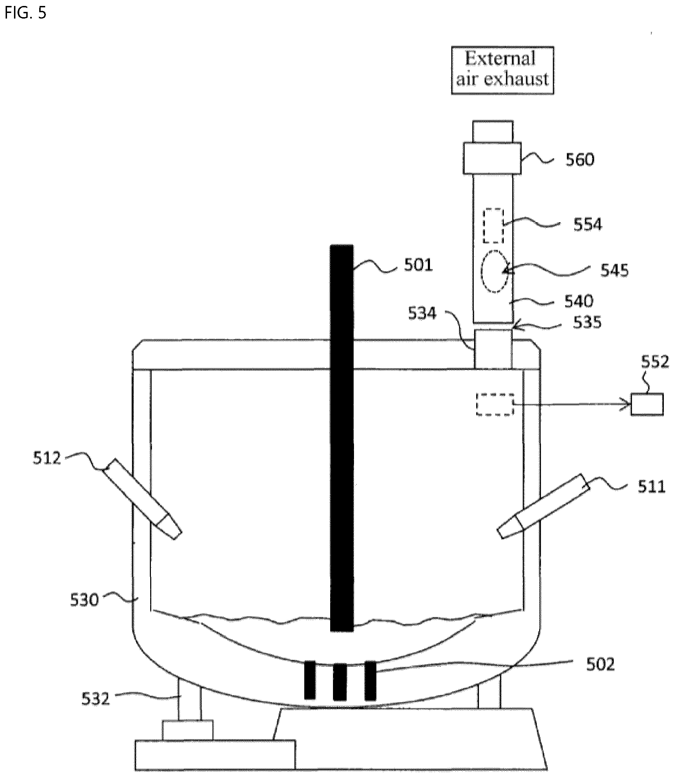

FIG. 5 shows one example of an electric furnace provided with a control system.

The electric furnace is provided with a main furnace body 530, a tilting device 532 which has telescopic rods which tilt the main furnace body 530 either to the left or the right, a multifunctional burner 511 and an oxygen burner 512 which are attached to side surfaces of the main furnace party 530, and an exhaust port 534 for exhaust gas discharged out of the main furnace body 530. The discharge port 34 may be provided to the top surface of the main furnace body 530 or an upper side of the side surfaces. At least one DC electrode (negative) 501 extends downward from the top surface, and one or more DC electrodes (positive) 502 are provided to the bottom section. Embodiment 2 is not limited to DC electrodes, which may also be AC electrodes.

A concentration analysis device 552 is provided near the exhaust port 534. The concentration analysis device 552 measures in real time the concentration of volatile gas components (e.g., O₂, CO, CO₂, etc.) in the exhaust gas and sends the measurement values to a control system (not shown in the drawings).

An exhaust duct 540 is provided having a certain gap 535 from the exhaust port 534. The exhaust duct 540 is straight but is not limited to this. The exhaust duct is provided with a detoxifying device 560 for detoxifying the exhaust gas to a level allowing emission into the atmosphere, and an exhaust fan (not shown in the drawings) upstream or downstream thereof.

In a combustion region 545 inside the exhaust duct, flammable gas included in the exhaust gas and air flowing in through the gap 535 cause a combustion reaction. A temperature measurement unit 554 (e.g., a thermocouple) measures in real time the temperature of the exhaust gas near the combustion region 545 or in a region downstream thereof in order to determine whether or not combustion has been confirmed in the combustion region 545, and sends the measurement value to the control system (not shown in the drawings).

If there has been a predetermined rise in temperature, it is determined that flammable gas is present.

The multifunctional burner 511 has the functionality of an air burner and an oxygen burner, and has a fuel introduction unit (not shown in the drawings) for introducing fuel, an air introduction unit (not shown in the drawings) for introducing air, an oxygen introduction unit (not shown in the drawings) for introducing oxygen, and a discharge unit (not shown in the drawings) for discharging flames resulting from the combustion reaction between a fuel and an oxidizing agent (air, oxygen). Each introduction unit is constituted having pipes, switch valves, pressure adjustment valves, flow rate adjustment valves, and so on, and is connected to each supply source (a fuel tank, an air tank, an oxygen tank, etc.).

The fuel introduction unit is provided with a fuel flow rate control unit (not shown in the drawings) which controls a supply amount for supplying fuel to the multifunctional burner 511. The air introduction unit is provided with an air flow rate control unit (not shown in the drawings) which controls a supply amount for supplying air to the multifunctional burner 511. The oxygen introduction unit (not shown in the drawings) is provided with an oxygen flow rate control unit (not shown in the drawings) which controls a supply amount for supplying oxygen to the multifunctional burner 511. The oxygen burner 512 has an oxygen introduction unit (not shown in the drawings) for introducing oxygen and an exhaust unit (not shown on the drawings) which discharges oxygen. The oxygen introduction unit is constituted having pipes, switch valves, pressure adjustment valves, flow rate adjustment valves, and so on, and is connected to an oxygen supply source (a tank, etc.). An oxygen flow rate control unit (not shown in the drawings) which controls a supply amount for supplying oxygen to the oxygen burner 512 is provided.

The control system (not shown in the drawings) provides overall control of batch processes for melting processes, e.g., Voltage control applied to the DC electrode (negative) 501 and the DC electrodes (positive) 502, providing drive control for the multifunctional burner 511, drive control for the oxygen burner 512, drive control for the tilting device 532 (starting and stopping), control for sending melted materials elsewhere, and control for inserting materials, etc.

Various settings are input into the control system (not shown in the drawings) or are stored in a memory (not shown in the drawings).

The various settings (used also in input data which is discussed below) include, for example, specifications relating to the rotary furnace (type, volume, capacity), data relating to materials (types of materials, quality of materials), process data, requisite energy amounts, melting temperature setting values, batch data, remaining amount setting values, weight setting values for inserted materials per batch, burner and arc energy ratios (when there are arc electrodes), time lag setting values (the amount of time from energy insertion to production of flammable gas, delay time in response speed), etc., and are stored in the memory (not shown in the drawings).

The control system (not shown in the drawings) associates volatile gas component concentrations measured by the concentration analysis device 552 and temperatures measured by the temperature measurement unit 554 with measurement times (or times when these are stored in memory) and stores these in the memory (not shown in the drawings).

The control system (not shown in the drawings) associates operation control data for each batch (burner output (supply amounts of fuel, oxygen, air, etc.) with times (or times when these are stored in memory) and stores it in the memory (not shown in the drawings).

A flammable gas quantity of state calculation unit (not shown in the drawings) uses a flammable gas quantity of state estimation model to calculate a flammable gas quantity of state in accordance with the prediction factor data (e.g., data relating to the furnace, data relating to materials, data relating to processes, etc.). The flammable gas produced inside the furnace can thereby be predicted. The prediction factor data may include all of the input data making up learning data discussed below or a plurality selected from thereamong, and may also include time series data for feature amounts of the exhaust gas constituting training data.

The flammable gas quantity of state estimation model is a software program and is stored in a model storage unit (not shown in the drawings). A method for generating the flammable gas quantity of state estimation model is described below.

A combustion control unit (not shown in the drawings) controls combustion inside the furnace on the basis of the flammable gas quantity of state thus calculated. The combustion control unit (not shown in the drawings) sends control instructions to a voltage application control unit (not shown in the drawings), a fuel flow rate control unit, an air flow rate control unit, and an oxygen flow rate control unit, controlling applied voltage and supply amounts in accordance with these control instructions. The voltage application control unit controls voltage applied to the DC electrode (negative) 501 and the DC electrodes (positive) 502.

In the present embodiment, the combustion control unit 11 carries out the following control in accordance with the calculated flammable gas quantity of state.
(1) Reducing the supply amount of fuel supplied to the multifunctional burner 511 by a predetermined percentage of a reference supply amount for a predetermined amount of time at a timing at which a threshold value or more of flammable gas is predicted to be produced.
(2) Increasing the supply amount of oxygen and/or air supplied to the multifunctional burner 511 by a predetermined percentage of a reference supply amount for a predetermined amount of time at a timing at which a threshold value or more of flammable gas is predicted to be produced.
(3) Increasing the supply amount of oxygen supplied to the oxygen burner 512 by a predetermined percentage of a reference supply amount for a predetermined amount of time at a timing at which a threshold value or more of flammable gas is predicted to be produced.
(4) Increasing or decreasing a voltage applied to DC electrodes or AC electrodes relative to a pre-set reference voltage.

Here, the supply amounts and applied voltage are increased and decreased, and the predetermined percentage for each is set according to the amount of flammable gas produced so as to satisfy the requisite energy amount.

The predetermined amount of time may be the amount of time during which a threshold value or more of flammable gas is predicted to be produced.

The supply amounts are increased and decreased for the predetermined amount of time, but this is not a limitation, and may be returned to the reference supply amount at a timing at which the flammable gas is predicted to reach or fall below the threshold value.

A display control unit (not shown in the drawings) displays the calculated flammable gas quantity of state to a display device (not shown in the drawings) as a time series graph.

A communication unit (not shown in the drawings) is a communication function for sending data back and forth to and from a model generation device 100 discussed below or other devices (tablet, smartphone, etc.).

In embodiment 2, A configuration in which the multi functional burner 511 and the oxygen burner 512 are provided was given as an example, but this is not a limitation, and either one or the other may be provided.

### (Other embodiments)

The furnace is not limited to a rotary furnace or an electric furnace and may also be a reverberatory furnace or an incineration furnace.

At least either of the concentration analysis device and the temperature measurement device may be installed. The concentration analysis device may be a diode laser analysis device or another device as long as it measures concentration.

The furnace may be provided with an oxidizing agent supply nozzle or oxidizing agent supply panel separate from the burner, and the combustion control unit may carry out supply control of the oxidizing agent. For example, combustion control is not limited to increasing or decreasing the supply amount of fuel and oxidizing agent; it is also possible to decrease the fuel and oxidizing agent supplied to the burner, and it is also possible to supply oxidizing agent to the oxidizing agent supply nozzle.

### Explanation of the Reference Numerals

- 10: Control system
- 11: Combustion control unit
- 12: Flammable gas quantity of state calculation unit
- 13: Model storage unit
- 14: Display control unit
- 20: Burner
- 30: Main furnace body
- 35: Gap
- 40: Exhaust duct
- 45: Combustion region
- 52: Concentration analysis device
- 54: Temperature measurement unit

## Claims

1. A furnace control system, having a flammable gas quantity of state calculation unit which calculates a flammable gas quantity of state corresponding to prediction factor data using a quantity of state estimation model for flammable gas originating in volatile organic compounds produced using intelligent information processing technology using as learning data past data relating to furnaces, data relating to materials, and data relating to exhaust gases, and a combustion control unit which controls furnace combustion on the basis of the flammable gas quantity of state calculated by the flammable gas quantity of state calculation unit.

2. The furnace control system as claimed in claim 1, wherein the furnace control unit
(1) reduces or increases fuel supplied to a burner depending on a reference burner combustion state which is pre-set;
(2) increases or decreases an oxidizing agent supplied to the burner depending on a reference burner combustion state which is pre-set;
(3) decreases fuel supplied to the burner on the basis of the reference burner combustion state which is pre-set and/or increases the oxidizing agent supplied to the burner;
(4) supplies the oxidizing agent to an oxidizing agent supply means which is separate from the burner; or
(5) reduces the fuel and oxidizing agent supplied to the burner and supplies the oxidizing agent to the oxidizing agent supply means
in accordance with the calculated flammable gas quantity of state.

3. The furnace control system as claimed in claim 1 or 2, having a display control unit which displays to a display unit the calculated flammable gas quantity of state as a time series graph.

4. The furnace control system as claimed in any one of claims 1-3, having a learning data generation unit which generates learning data,
a training data generation unit which generates training data, and
an estimation model generation unit which generates a flammable gas quantity of state estimation model using the learning data and the training data.

5. The furnace as claimed in any one of claims 1-4, comprising
a main furnace body,
a burner which is provided to the main furnace body,
an exhaust port for exhaust gas emitted from the main furnace body,
an exhaust duct which is provided having a certain gap away from the exhaust port,
a combustion region in which uncombusted gas included in exhaust gas and air flowing in through the gap cause a combustion reaction inside the exhaust duct, and
a temperature measurement unit and/or a pressure measurement unit which measures the temperature and/or pressure of the combustion region.

6. A furnace combustion control method, including a flammable gas quantity of state calculation step of calculating a flammable gas quantity of state corresponding to prediction factor data using a quantity of state estimation model for flammable gas originating in volatile organic compounds produced using intelligent information processing technology using as learning data past data relating to furnaces, data relating to materials, and data relating to exhaust gases, and
a combustion control step of controlling furnace combustion on the basis of the flammable gas quantity of state calculated in the flammable gas quantity of state calculation step.

7. The furnace control method as claimed in claim 5, wherein the furnace control step
(1) reduces or increases fuel supplied to a burner depending on a reference burner combustion state which is pre-set;
(2) increases or decreases an oxidizing agent supplied to the burner depending on a reference burner combustion state which is pre-set;
(3) decreases fuel supplied to the burner on the basis of the reference burner combustion state which is pre-set and/or increases the oxidizing agent supplied to the burner;
(4) supplies the oxidizing agent to an oxidizing agent supply means which is separate from the burner; or
(5) reduces the fuel and oxidizing agent supplied to the burner and supplies the oxidizing agent to the oxidizing agent supply means
in accordance with the calculated flammable gas quantity of state.

8. The furnace combustion control method as claimed in claim 5 or 6, having a display step of displaying to a display unit the calculated flammable gas quantity of state as a time series graph.

9. The furnace control method as claimed in any one of claims 5-7, having a learning data generation step of generating learning data,
a training data generation step of generating training data, and
an estimation model generation step of generating a flammable gas quantity of state estimation model using the learning data and the training data.
